# EUROPÄISCHE PATENTANMELDUNG

(11) **EP 3 670 156 A1**
(43) Veröffentlichungstag der Anmeldung: **24.06.2020**
(21) Anmeldenummer: 18213908.9
(22) Anmeldetag: 19.12.2018
(51) Int. Cl.: B29C 70/02, B29C 70/86, B65B 11/02, B29C 70/20, B29C 53/80, B29C 70/32, F16L 9/16, B29K 101/10, B29K 101/12, B29L 31/00

(54) **VERFAHREN ZUR HERSTELLUNG EINES GEHÄRTETEN ELEMENTS**

(71) Anmelder: BASF Polyurethanes GmbH, 49448 Lemförde (DE)
(72) Erfinder: Daun, Gregor, 67056 Ludwigshafen am Rhein (DE); Wucherpfennig, Jan, 49448 Lemfoerde (DE); Korff, Christian, 49448 Lemfoerde (DE); Moeller, Martin, 67056 Ludwigshafen am Rhein (DE)
(74) Vertreter: Altmann Stößel Dick Patentanwälte PartG mbB

(57) **Zusammenfassung**

Verfahren (110) zur Herstellung eines gehärteten Elements, wobei das Verfahren (110) die folgenden Schritte umfasst:
- Bereitstellen (112) eines Komposite-Elements (114), welches eine eine äußere Oberfläche (116) bildende Schicht aufweist, wobei die die äußere Oberfläche (116) bildende Schicht mindestens ein ungehärtetes Duroplastsystem oder mindestens ein ungehärtetes Thermoplastsystem und Verstärkungsfasern (118) aufweist, wobei die Verstärkungsfasern (118) zumindest teilweise in das Duroplastsystem oder Thermoplastsystem eingebettet sind,
- Applizieren (120) mindestens einer ersten Folienschicht (122) auf die die äußere Oberfläche (116) bildende Schicht, wobei die mindestens eine erste Folienschicht (122) in einer Drehrichtung (124) entgegen einer Faserapplikationsrichtung (126) der Verstärkungsfasern (118) der äußeren Oberfläche (116) appliziert wird.

## Beschreibung

Die vorliegende Erfindung betrifft ein Verfahren zur Herstellung eines gehärteten Elements. Weiterhin betrifft die Erfindung ein gehärtetes Element und eine Verwendung ausgewählt aus der Gruppe bestehend aus einem Stabilisator, einer Drehstabfeder, einer Schraubenfeder, einem Rohr, einem Lenkgestänge, einem Handlauf, und einem Geländer.

Faserverstärkte Werkstoffe (Faserverbundwerkstoffe) enthalten als wesentliche Komponenten Fasern, beispielsweise basierend auf Glas, Kohlenstoff, Aramid oder Nylon, als Verstärkungsmaterial und ein Matrixsystem, beispielsweise duroplastische oder thermoplastische Polymere. Bekannte Verfahren zur Herstellung von Federn und Stabilisatoren aus Faserverbundwerkstoffen verwenden zur Herstellung von Strangprofilen aus faserverstärkten Werkstoffen beispielsweise Strangziehverfahren (Pultrusionsverfahren), Filament-Winding-Verfahren oder Pullwinding-Verfahren, welche eine Kombination des Strangzieh- und Filament-Winding-Verfahrens darstellt. Beispielsweise können in einem Filament-Winding-Verfahren mit einem ungehärteten Reaktivharz benetzte Fasern zu einem Strangprofil verarbeitet werden und in einer weiteren Formgebung geformt werden.

In derartigen Verfahren muss ein tropfnasses Strangprofil weiterverarbeitet werden und es kann zu einem Austreten und Auslaufen des Harzes kommen. DE 3031582 A1 beschreibt ein Wendelförmiges Bauteil aus faserverstärktem Kunststoff bestehend aus einer äußeren biegsamen Hülle, einer darunterliegenden Schicht von draht- oder bandförmigen Material aus ausgehärtetem, faserverstärkten Werkstoff, der über einen hohlen oder vollen Wickelkern aus biegsamen Werkstoff gewickelt ist. Weiter werden Ummantelungen beispielsweise in DE 2135643 A, DE 3506037 C1, DE 10 2012 112 937 A1, JP 51114472 A, JP 7323492, JP 3069345, JP 9226012, JP 55014247 A, JP 7108620, JP 2003300256 A, US 6,454,251 B1, US 4,473,217 A und US 4765602 A beschrieben. Derartige vorgeschlagene Ummantelungen können jedoch nachteilig hinsichtlich einer Festigkeit der Feder und Stabilisatoren sein. Bei der Härtung und Formung kann sich die Ummantelung in das darunterliegende Material eingraben, beziehungsweise dieses Einschnüren, und so zu einer Verringerung der Festigkeit führen, woraus ein Versagen der Feder resultieren kann (Carbon Fibre Coil Springs, J.C. Hendry and C. Probert, Materials & Design, Vol. 7, No. 6, 1986, S. 330-337).

Es ist daher Aufgabe der vorliegenden Erfindung ein Verfahren zur Herstellung eines gehärteten Elements und ein gehärtetes bereitzustellen, welche die Nachteile bekannter Vorrichtungen und Verfahren zumindest weitgehend vermeiden. Insbesondere soll bei der Herstellung des gehärteten Elements ein Auslaufen eines ungehärteten Reaktivharzes vermieden werden und eine Festigkeit des gehärteten Elements gewährleistet sein.

Diese Aufgabe wird gelöst durch ein Verfahren und Vorrichtungen mit den Merkmalen der unabhängigen Patentansprüche.

Im Folgenden werden die Begriffe "haben", "aufweisen", "umfassen" oder "einschließen" oderbeliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merk-male vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann. Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, deren Beschreibung durch diese Begriffe eingeleitet wird, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden sollen. Weiterhin sollen durch diese einleitenden Ausdrücke sämtliche Möglichkeiten, die hierdurch eingeleiteten Merkmale mit anderen Merkmalen zu kombinieren, seien es optionale oder nichtoptionale Merkmale, unangetastet bleiben.

In der vorliegenden Erfindung wird ein Verfahren zur Herstellung eines gehärteten Elements vorgeschlagen. Das Verfahren umfasst die folgenden Schritte:
- Bereitstellen eines Komposite-Elements, welches eine eine äußere Oberfläche bildende Schicht aufweist, wobei die die äußere Oberfläche bildende Schicht mindestens ein ungehärtetes Duroplastsystem oder mindestens ein ungehärtetes Thermoplastsystem und Verstärkungsfasern aufweist, wobei die Verstärkungsfasern zumindest teilweise in das Duroplastsystem oder Thermoplastsystem eingebettet sind,
- Applizieren mindestens einer ersten Folienschicht auf die die äußere Oberfläche bildende Schicht, wobei die mindestens eine erste Folienschicht in einer Drehrichtung entgegen einer Faserapplikationsrichtung der Verstärkungsfasern der äußeren Oberfläche appliziert wird.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Unter einem "gehärteten Element" ist ein biegesteifes Element, insbesondere ein Bauteil, zu verstehen, welches mindestens ein gehärtetes Duroplastsystem oder mindestens ein ausreagiertes Thermoplastsystem aufweist. Bevorzugt kann das gehärtete Element ausgewählt sein aus der Gruppe bestehend aus einer Schraubenfeder, einer Drehstabfeder, einem Rohr, einem Stabilisator, einem Lenkgestänge, einem Handlauf, und einem Geländer.

Unter einem "Komposite-Element" ist ein Verbundwerkstoff oder Komposite-Werkstoff aus zwei oder mehr verbundenen Materialien zu verstehen. Bevorzugt kann das Komposite-Element ein Halbzeug sein, welches beispielsweise mindestens ein Element aufweist ausgewählt aus der Gruppe bestehend aus einem Strang, insbesondere einem Strangprofil; einem Stab; einem Rohr; einer Platte; einem Endlosprofil; und einer Endlosplatte. Das Komposite-Element kann eine äußere Oberfläche, einen Querschnitt und eine Längsausdehnung aufweisen. Das Komposite-Element kann ein Hohl- oder Kompaktkörper sein. Das Komposite-Element kann eine Hohlprofil oder ein Vollprofil aufweisen.

Unter einer "Schicht" des Komposite-Elements ist ein Bereich des Komposite-Element in flächenhafter Ausdehnung in einer gewissen Höhe zu verstehen, welche insbesondere über, unter oder zwischen anderen Elementen liegt. Unter einer "äußere Oberfläche" des Komposite-Elements ist eine Außenfläche des Komposite-Elements zu verstehen. Die äußere Oberfläche kann im Wesentlichen parallel zur Längsausdehnung, insbesondere im Wesentlichen parallel zu einer Längsachse, des Komposite-Elements angeordnet sein. Beispielsweise kann bei einem zylindrischen Komposite-Element die Mantelfläche des Zylinders die äußere Oberfläche sein. "Im wesentlichen parallel" kann dabei die Parallelität selbst aber auch Abweichungen von ±10% umfassen. Die die äußere Oberfläche bildende Schicht kann eine Dicke aufweisen. Die Dicke kann eine Ausdehnung der Schicht senkrecht zu der Längsachse sein. Die Dicke kann im Bereich von 0,1 bis 20 mm, vorzugsweise im Bereich von 0,2 mm bis 15 mm liegen.

Die die äußere Oberfläche bildende Schicht weist mindestens ein ungehärtetes Duroplastsystem oder ein ungehärtetes Thermoplastsystem und Verstärkungsfasern auf. Unter einem "Duroplastsystem" ist ein duroplastisches Matrixsystem zu verstehen. Das Duroplastsystem kann mindestens ein Matrixsystem umfassend mindestens ein duroplastisches Polymer aufweisen. Das Duroplastsystem kann ein Duroplastsystem auf Basis von Polyester, Epoxidharz, Vinylester, Dicyclopentadien, Polyurethan, Acrylat oder Polyurethan-Acrylat sein. Unter einem "ungehärteten Duroplastsystem" kann ein nicht oder nicht vollständig ausgehärtetes Duroplastsystem verstanden werden, insbesondere kann das Duroplastsystem einen geringen Polymerisationsgrad aufweisen. Unter einem "Thermoplastsystem" ist ein reaktives thermoplastisches Matrixsystem zu verstehen. Das Thermoplastsystem kann mindestens ein Matrixsystem umfassend mindestens ein thermoplastisches Polymer aufweisen. Das Thermoplastsystem kann ein Thermoplastsystem auf Basis von Caprolactam oder Polymethyl Methacrylat sein. Unter einem "ungehärteten Thermoplastsystem" ist ein nicht oder nicht vollständig polymerisiertes Thermoplastsystem zu verstehen. Das Komposite-Element kann insbesondere biegeschlaff sein.

Die Verstärkungsfasern können ausgewählt sein aus der Gruppe bestehend aus Glasfasern, Kohlefasern, Basaltfasern, Nylon-Fasern, und Aramid-Fasern. Unter "Verstärkungsfaser(n)" können im Rahmen der vorliegenden Erfindung Endlosfasern verstanden werden, welche als Einzelfaser oder gebündelt eingesetzt werden. Die Verstärkungsfasern können in Form von so genannten "Rovings" als Bündel, Strang oder Multifilamentgarn aus im Wesentlichen parallel angeordneten Filamenten (Endlosfasern) eingesetzt werden. Der Querschnitt eines Rovings ist vorzugsweise elliptisch oder rechteckig, wobei elliptisch auch die runde Form umfasst. Bevorzugt werden Glasfaser-Rovings mit einer Feinheit im Bereich von 100 bis 10.000 tex, vorzugsweise im Bereich von 600 bis 4000 tex, eingesetzt.

Unter "Bereitstellen" des Komposite-Elements ist ein Erzeugen und/oder Herstellen eines Komposite-Elements zu verstehen. Das Bereitstellen des Komposite-Elements kann ein Bereitstellen eines inneren Elements und ein Aufbringen des Duroplastsystems oder Thermoplastsystems und der Verstärkungsfasern, insbesondere gemeinsam, umfassen. Das innere Element kann ein sogenannter "Inliner" oder Kern des Komposite-Elements sein. Das Komposite-Element kann ein Hohlkörper sein. Das innere Element kann beispielsweise ein Rohr oder einen Schlauch aufweisen, insbesondere aus duroplastischem oder thermoplastischem Kunststoff, bevorzugt einen Schlauch aus Polyethylen oder thermoplastischem Polyurethan. Das innere Element kann beispielsweise ein Strang verdrillter Fasern, insbesondere Glasfasern, sein.

Die Verstärkungsfasern sind zumindest teilweise in das Duroplastsystem oder Thermoplastsystem eingebettet. Die Verstärkungsfasern können beispielsweise mit dem Duroplastsystem oder Thermoplastsystem imprägniert und/oder benetzt und/oder behandelt sein. Unter "Imprägnieren" kann ein beliebiger Vorgang verstanden werden, bei welchem ein fester Stoff, mit einer gelösten, emulgierten oder dispergierten Substanz behandelt wird. Nach der Imprägnierung kann ein Teil der Substanz auf einer Oberfläche des Stoffs verbleiben.

Die Verstärkungsfasern, insbesondere die benetzten Verstärkungsfasern, können auf das innere Element appliziert werden. Unter "Applizieren" der Verstärkungsfasern ist ein Aufbringen der Verstärkungsfasern auf das innere Element zu verstehen. Das Applizieren der Verstärkungsfasern kann entlang der Faserapplikationsrichtung erfolgen. Unter einer "Faserapplikationsrichtung" ist eine Richtung zu verstehen, entlang welcher die Verstärkungsfasern appliziert werden, insbesondere eine Drehrichtung oder eine Wicklungsrichtung. Die Verstärkungsfasern können um das innere Element gewickelt werden. Unter "Wickeln um das innere Element" ist im Rahmen der vorliegenden Erfindung ein beliebiger Vorgang zu verstehen, bei welchem die Verstärkungsfasern um das innere Element gelegt und/oder gewunden und/oder gebunden und/oder gezogen werden, insbesondere um eine Längsachse des inneren Elements. Die Faserapplikationsrichtung kann linksdrehend oder rechtsdrehend sein. Die Längsachse des inneren Elements kann beispielsweise eine z-Achse sein. Unter einer "rechtsdrehenden" Faserapplikationsrichtung ist eine Applikation mit einem mathematisch negativen Drehsinn im Uhrzeigersinn um die Längsachse des inneren Elements zu verstehen. Unter einer "linksdrehenden" Faserapplikationsrichtung ist eine Applikation mit einem mathematisch positiven Drehsinn im Gegenuhrzeigersinn zu verstehen. Die Faserapplikation kann in einem Winkel zu der Längsachse des inneren Elements erfolgen. Beispielsweise kann ein Winkel zwischen der Längsachse und den Verstärkungsfasern in einem Bereich von 15° bis und 75° sein. Das Bereitstellen des Komposite-Elements kann beispielsweise mittels eines Pultrusions-Verfahrens, eines Filament-Winding-Verfahrens oder eines Pullwinding-Verfahrens erfolgen.

Das Komposite-Element kann mehrere Lagen der Verstärkungsfasern aufweisen. Beispielsweise kann das Komposite-Element eine erste Lage und eine zweite Lage aufweisen. Beispielsweise kann die erste Lage eine innere Lage sein, um welche die zweite Lage angeordnet ist. Die Faserapplikationsrichtung der ersten Lage kann sich von der Faserapplikationsrichtung der zweiten Lage unterscheiden. Beispielsweise kann die erste Lage linksdrehend und die zweite Lage rechtsdrehend appliziert werden. Beispielsweise kann die erste Lage rechtsdrehend und die zweite Lage linksdrehend appliziert werden. Die Faserapplikationsrichtungen der ersten und der zweiten Lage können abhängig von einer Ausgestaltung des gehärteten Elements gewählt werden, beispielsweise einer Drehrichtung einer Schraubenfeder um eine zentrale Achse der Schraubenfeder. Die erste Lage kann derart appliziert werden, dass sie bei einer linksdrehenden Schraubenfeder linksdrehend und bei einer rechtsdrehenden Schraubenfeder rechtsdrehend ist, so dass die Verstärkungsfasern bei Druck auf die Schraubenfeder selber unter Längsdruck geraten. Die zweite Lage kann derart appliziert werden, dass sie bei einer linksdrehenden Schraubenfeder rechtsdrehend und bei einer rechtsdrehenden Schraubenfeder linksdrehend sind, so dass die Verstärkungsfasern bei Druck auf die Schraubenfeder selber unter Längszug geraten. Unter einer "rechtsdrehenden" Schraubenfeder ist eine Schraubenfeder mit mathematisch negativem Drehsinn im Uhrzeigersinn um die zentrale Achse der Schraubenfeder zu verstehen. Unter einer "linksdrehenden" Schraubenfeder kann eine Schraubenfeder mit mathematisch positivem Drehsinn im Gegenuhrzeigersinn um die zentrale Achse der Schraubenfeder zu verstehen.

Unter einer "ersten Folienschicht" ist ein Folienmaterial in flächenhafter Ausdehnung in einer gewissen Höhe zu verstehen. Die erste Folienschicht kann eine Lage oder einer Vielzahl von Lagen des Folienmaterials aufweisen. Das Folienmaterial kann vor dem Applizieren als Bandmaterial vorliegen. Beispielsweise kann das Folienmaterial um eine Spule gewickelt sein. Unter "Applizieren" der ersten Folienschicht auf die die äußere Oberfläche bildende Schicht ist ein Aufbringen der ersten Folienschicht auf die die äußere Oberfläche bildende Schicht zu verstehen. Das Applizieren der mindestens einen ersten Folienschicht kann manuell oder maschinell erfolgen. Das Applizieren der ersten Folienschicht kann entlang einer Drehrichtung erfolgen. Das Applizieren der ersten Folienschicht kann ein Umwickeln des Komposite-Elements mit Folie umfassen. Unter "Umwickeln des Komposite-Elements" ist im Rahmen der vorliegenden Erfindung ein beliebiger Vorgang zu verstehen, bei welchem die erste Folienschicht um das Komposite-Elements gelegt und/oder gewunden und/oder gebunden und/oder gezogen wird, insbesondere um eine Längsachse des Komposite-Elements.

Übliche Ummantelungen, wie die beispielsweise aus den oben zitierten Dokumenten bekannten Ummantelungen, können nachteilig hinsichtlich einer Festigkeit des gehärteten Elements sein. Bei einer Aushärtung und Formung kann sich die Ummantelung in das darunterliegende Material eingraben, beziehungsweise dieses einschnüren, und so zu einer Verringerung der Festigkeit führen, woraus ein Versagen des gehärteten Elements resultieren kann. Erfindungsgemäß wird vorgeschlagen, dass die mindestens eine erste Folienschicht in einer Drehrichtung entgegen einer Faserapplikationsrichtung der Verstärkungsfasern der äußeren Oberfläche appliziert wird. Die Drehrichtung der Applikation der ersten Folienschicht kann somit umgekehrt zur Drehrichtung der letzten Faserlage des Komposite-Elements erfolgen. Beispielsweise kann die mindestens eine erste Folienschicht linksdrehend bei einer für die äußerste Lage rechtsdrehenden Faserapplikationsrichtung auf die die äußere Oberfläche bildende Schicht appliziert werden. Beispielsweise kann die mindestens eine erste Folienschicht rechtsdrehend bei einer für die äußerste Lage linksdrehenden Faserapplikationsrichtung auf die die äußere Oberfläche bildende Schicht appliziert werden. Überraschender Weise kann so ein Einschnüren der Folienschicht in das Komposite-Element beim Aushärten und Formen verhindert werden.

Die erste Folienschicht kann derart appliziert werden, dass ein Auslaufen des Komposite-Elements verhindert wird. Die erste Folienschicht kann sich zumindest teilweise überlappend appliziert werden, derart dass zwischen den Lagen der ersten Folienschicht ein Austreten von Flüssigkeit aus dem Komposite-Elements verhindert wird. Die mindestens eine erste Folienschicht kann selbst adhäsiv sein. Unter "selbst adhäsiv" kann verstanden werden, dass sich zumindest teilweise überlappende Lagen der ersten Folienschicht versiegeln, insbesondere einen Flüssigkeitsaustritt verhindern. Eigenadhäsion von Folien kann eine Eigenschaft sein, welche es erlaubt, ein von der Folie umgebendes Element zu versiegeln, insbesondere vor Luft und/oder Feuchtigkeit. Beispielsweise können Haushaltsfolien Lebensmittel gegen Luft, Feuchtigkeit und Geruch versiegeln. Die erste Folienschicht und/oder die weiter unten beschriebene zweite Folienschicht können eine Eigenadhäsion im Bereich von 2 bis 100 kPa, bevorzugt von 10 bis 80 kPa aufweisen. Die Eigenadhäsion einer Folie kann analog zur Festigkeit von Verklebungen gemäß ISO 527-3 geprüft werden. Beispielsweise wurden zwei dünne Kunststoffstreifen der Größe 5 x 12,5 cm an je einem Ende auf einer Fläche von 5 x 5 cm mit der zu prüfenden Folie einlagig umwickelt. Die Kunststoffstreifen wurden dann mit den jeweils umwickelten Folienflächen aufeinander gelegt und mit einem Klemmdruck von 3 bar einmalig zusammen gepresst. Danach wurden die Streifen in Längsrichtung mit 25 mm/min auseinandergezogen bis die Zugkraft größer wurde als die Adhäsion der Folienflächen aufeinander. Die kritische Eigenadhäsion wurde als Spannung berechnet aus dem Quotienten der Prüfkraft beim Ablösen der Folien voneinander und der Quadratfläche von 25 cm². Diese Spannung lag bei 10 Versuchen im Mittel bei 59,7 N / 25 cm² = 2,4 N/cm² = 24000 Pa = 24 kPa.

Die mindestens eine erste Folienschicht kann mindestens ein Material aufweisen ausgewählt aus der Gruppe bestehend aus Polyamid (PA); Polyethylen (PE); Polyethylen niedriger Dichte (LDPE); Polyethylennaphthalat (PEN); Polyethylenterephthalat (PET); Polypropylen (PP); Polyurethan (PU); Polyether Polyurethan; Polyimid (PI); Polyvinylalkohol (PVOH); und Polyvinylchlorid (PVC). Die Folienschicht kann ein mehrlagiges Material sein, beispielsweise umfassend verschiedene Polymere, wie beispielsweise PE/PA/PE; PET/PE; PE/PP.

Das Folienmaterial der ersten Folienschicht kann temperaturbeständig bis mindestens zu einer Aushärtetemperatur des Duroplastsystems und/oder des Thermoplastsystems sein. Das Folienmaterial kann temperaturbeständig bis bevorzugt ≥120 °C, besonders bevorzugt bis ≥160 °C sein. So kann ein Aushärteprozess zum Aushärten des Komposite-Elements bei hohen Temperaturen möglich sein.

Das Folienmaterial kann eine Dicke von 1 bis 50 µm, bevorzugt eine Dicke von 1 bis 20 µm, besonders bevorzugt eine Dicke von 1 bis 10 µm aufweisen. Durch eine Verwendung einer derart dünnen Folie können ein Formen des Komposite-Elements und ein Wärmetransport möglich sein. Insbesondere kann die erste Folienschicht als dünne Schicht ausgestaltet sein, so dass ein Formen des Komposite-Elements und ein Wärmetransport möglich sind. Wie oben beschrieben, kann das Folienmaterial vor dem Applizieren als Bandmaterial vorliegen. Eine Länge des Folienmaterials kann eine Ausdehnung des Folienmaterials entlang einer Längserstreckungsrichtung des Bandmaterials sein. Unter einer Breite des Folienmaterials kann eine Ausdehnung in Richtung senkrecht zur Länge des Folienmaterials in derselben Ebene verstanden werden. Unter einer Höhe oder Dicke Folienmaterials kann eine Abmessung in Richtung senkrecht zur Länge und Breite des Folienmaterials verstanden werden.

Das Folienmaterial kann dehnbar sein. Eine hohe Dehnbarkeit und Elastizität kann ermöglichen, dass das Folienmaterial sich der Originalform des Halbzeugs durch Dehnung anpassen kann und dass das Folienmaterial auch der Umformung des Halbzeugs folgen kann ohne dieselbe zu behindern. Die Folienmaterialien können durch Recken in Längsrichtung von einer ursprünglich dickeren Folie in eine dünnere Folie überführt werden. Dadurch können sich üblicherweise geringere mögliche Restdehnungen der Folie in Längsrichtung als in Querrichtung ergeben. Das Folienmaterial kann eine Dehngrenze von 10 % bis 250 % in eine Längsrichtung und von 200 % bis 1000 % in eine Querrichtung aufweisen, bevorzugt eine Dehngrenze von 20 % bis 125 % in eine Längsrichtung und von 300 % bis 600% in eine Querrichtung. Unter einer "Längsrichtung" ist eine Richtung entlang einer Längserstreckungsrichtung des Folienmaterials, insbesondere des Bandmaterials, zu verstehen. Unter einer "Querrichtung" ist eine Richtung senkrecht zur der Längserstreckungsrichtung in derselben Ebene zu verstehen. Die zu applizierende Folie kann beim Applizieren durch Bremsen der Folienspule oder Bremsen einer Umlenkrolle unter Spannung gehalten werden. Dabei kann eine gewisse Mindestspannung notwendig sein, um die Folie unter Spannung an die Geometrie des Halbzeuges anzupassen statt dieses nur lose und faltenreich zu umwickeln. Eine zu hohe Spannung kann zum Riss der Folie oder schon bei der Applikation zum Einschnüren des Halbzeugs führen. Eine Folienspannung kann bei einer Kraft von 15 N liegen für eine Folie der Breite 10 cm und Dicke 6 µm, was einer Zugspannung der Folie von 15 N / 0,1 m / 0,000006 m = 25 MPa entspricht. Die zu applizierende Folie kann mit einer Zugspannung aufgebracht werden, wobei die Zugspannung in einem Bereich von 1 MPa bis 100 MPa, bevorzugt von 5 MPa bis 80 MPa, besonders bevorzugt von 10 MPa bis 60 MPa ist.

Das Verfahren kann weiter ein Applizieren mindestens einer zweiten Folienschicht teilweise oder vollständig überlappend mit der mindestens einen ersten Folienschicht auf die die äußere Oberfläche bildende Schicht umfassen. Hinsichtlich des Applizierens der zweiten Folienschicht und der Eigenschaften des Folienmaterials der zweiten Folienschicht kann auf die Beschreibung des Applizierens der ersten Folienschicht und des Folienmaterials der ersten Folienschicht verwiesen werden. Das Folienmaterial der zweiten Folienschicht und das Folienmaterial der ersten Folienschicht können identisch oder verschieden ausgestaltet sein. Unter "teilweise oder vollständig überlappend" kann verstanden werden, dass die zweite Folienschicht derart auf die erste Folienschicht appliziert wird, dass ein Auslaufen des Komposite-Elements verhindert wird. Die erste Folienschicht und die zweite Folienschicht können sich zumindest teilweise überlappend appliziert werden, derart zwischen den Lagen der ersten Folienschicht und der zweiten Folienschicht ein Austreten von Flüssigkeit aus dem Komposite-Elements verhindert wird. Das Verfahren kann weiter ein Applizieren von einer Mehrzahl von weiteren Folienschichten teilweise oder vollständig überlappend mit der mindestens einen ersten Folienschicht auf die die äußere Oberfläche bildende Schicht umfassen. Durch Applizieren von mehr als einer Folienschicht von mehr als einer Rolle gleichzeitig kann eine Neutralisation von Seitenkräften, die durch die Zugspannung auf der Folie beim Applizieren entstehen, ermöglicht werden.

Das Verfahren kann mindestens einen Formungsschritt umfassen. In dem Formungsschritt kann das Komposite-Element unter annähernder Beibehaltung eines Querschnitts geformt werden. Der Ausdruck "annähernde Beibehaltung des Querschnitts" umfasst Abweichung vom ursprünglichen, vor der Formung vorliegenden Querschnitts des Komposite-Elements von bis zu 15%, vorzugsweise im Bereich von 5 bis 15%. Insbesondere bei runder Form des Querschnitts kann dies als so genannte "Ovalität" definiert sein, welche ebenfalls ≤ 15% beträgt und vorzugsweise im Bereich von 5 bis 15% liegt. Beispielsweise kann die Ovalität eine Abweichung von einer Kreisform angeben, beispielsweise ein Längenunterschied zwischen einer Längsachse und einer Querachse des Querschnitts, wobei die Längsachse und die Querachse orthogonal zueinander sind. Die Längsachse kann beispielsweise eine maximale Längsausdehnung des Querschnitts sein. Die Querachse kann beispielsweise eine maximale Querausdehnung des Querschnitts sein. Der Formungsschritt kann nach dem Applizieren der mindestens einer ersten Folienschicht, insbesondere und der mindestens einen zweiten Folienschicht, erfolgen. Der Formungsschritt kann ein Einbringen des folierten Komposite-Elements in eine Formgebeeinheit umfassen. Die Formgebeeinheit kann mindestens ein Element aufweisen ausgewählt aus der Gruppe bestehend aus einer Matrize; einer Außenform, insbesondere einer Außenform mit helikaler Nut, einer Außenform mit beweglicher Kontaktfläche oder mit unbeweglicher, glatter und gleitfähiger Kontaktfläche; einer Innenform, insbesondere einer Innenform mit helikaler Nut; einer Rolle; und einer Öffnung. Das Formen kann insbesondere das Formen zu einer Gestalt ausgewählt aus der Gruppe bestehend aus einer Schraubenfeder, einer Drehstabfeder, einem Rohr, einem Stabilisator, einem Lenkgestänge, einem Handlauf, und einem Geländer umfassen.

Das Verfahren kann weiter mindestens einen Aushärteschritt aufweisen, wobei in dem Aushärteschritt das Komposite-Element ausgehärtet wird. Der Formungsschritt kann vor dem Aushärteschritt und/oder während des Aushärteschritts erfolgen. Unter "Aushärten" kann ein Übergang des ungehärteten Komposite-Elements zu einem ausgehärteten Zustand verstanden werden. In dem ausgehärteten Zustand kann das Duroplastsystem oder das Thermoplastsystem ausreagiert sein und/oder vollständig polymerisiert sein und/oder einen Polymerisationsgrad von mindestens 90 %, bevorzugt 95 % aufweisen. Das Aushärten des Komposite-Elements kann über eine Energiezufuhr, beispielsweise durch Strahlung, insbesondere durch Strahlung im Infrarot oder im Radiowellen Bereich, und/oder konvektiven Wärmetransport mit Heißluft oder Flüssigkeit erfolgen. Die Flüssigkeit kann beispielsweise Öl sein, wobei das Aushärten in einem Ölbad erfolgen kann. Die Verwendung der mindestens einen ersten Folienschicht kann eine direkte Aushärtung über konvektiven Wärmetransport mit heißer Luft oder Flüssigkeit erlauben ohne Kontamination oder Vermischung des Polymersystems mit dem Wärmeträger.

Weiter wird in der vorliegenden Erfindung ein gehärtetes Element vorgeschlagen. Das gehärtete Element ist hergestellt oder herstellbar durch ein erfindungsgemäßes Verfahren zur Herstellung eines gehärteten Elements nach einer der oben oder weiter unten beschriebenen Ausführungsformen. Dementsprechend kann für Definitionen und optionale Ausgestaltungen auf die Beschreibung des erfindungsgemäßen Verfahrens verwiesen werden.

Weiter wird in der vorliegenden Erfindung eine Verwendung eines gehärteten Elements nach einer der oben oder weiter unten beschriebenen Ausführungsformen vorgeschlagen, ausgewählt aus der Gruppe bestehend aus einem Stabilisator, einer Drehstabfeder, einer Schraubenfeder , einem Rohr, einem Lenkgestänge, einem Handlauf, und einem Geländer.

Zusammenfassend werden, ohne Beschränkung weiterer möglicher Ausgestaltungen, folgende Ausführungsformen vorgeschlagen:
Ausführungsform 1: Verfahren zur Herstellung eines gehärteten Elements, wobei das Verfahren die folgenden Schritte umfasst:
   - Bereitstellen eines Komposite-Elements, welches eine eine äußere Oberfläche bildende Schicht aufweist, wobei die die äußere Oberfläche bildende Schicht mindestens ein ungehärtetes Duroplastsystem oder mindestens ein ungehärtetes Thermoplastsystems und Verstärkungsfasern aufweist, wobei die Verstärkungsfasern zumindest teilweise in das Duroplastsystem oder Thermoplastsystem eingebettet sind,
   - Applizieren mindestens einer ersten Folienschicht auf die die äußere Oberfläche bildende Schicht, wobei die mindestens eine erste Folienschicht in einer Drehrichtung entgegen einer Faserapplikationsrichtung der Verstärkungsfasern der äußeren Oberfläche appliziert wird.
Ausführungsform 2: Verfahren nach Ausführungsform 1, wobei die mindestens eine erste Folienschicht linksdrehend bei einer für die äußerste Lage rechtsdrehenden Faserapplikationsrichtung auf die die äußere Oberfläche bildende Schicht appliziert wird, oder wobei die mindestens eine erste Folienschicht rechtsdrehend bei einer für die äußerste Lage linksdrehenden Faserapplikationsrichtung auf die die äußere Oberfläche bildende Schicht appliziert wird.
Ausführungsform 3: Verfahren nach einer der Ausführungsformen 1 und 2, wobei das Applizieren der ersten Folienschicht ein Umwickeln des Komposite-Elements mit Folie umfasst.
Ausführungsform 4: Verfahren nach einer der Ausführungsformen 1 bis 3, wobei ein Folienmaterial der ersten Folienschicht temperaturbeständig bis mindestens zu einer Aushärtetemperatur des Duroplastsystems oder des Thermoplastsystems ist, wobei das Folienmaterial temperaturbeständig bis bevorzugt ≥120 °C, besonders bevorzugt bis ≥160 °C ist.
Ausführungsform 5: Verfahren nach Ausführungsform 4, wobei das Folienmaterial eine Dicke von 1 bis 50 µm, bevorzugt eine Dicke von 1 bis 20 µm, besonders bevorzugt eine Dicke von 1 bis 10 µm aufweist.
Ausführungsform 6: Verfahren nach einer der Ausführungsformen 3 und 4, wobei das Folienmaterial dehnbar ist, wobei das Folienmaterial eine Dehngrenze von 10 % bis 250 % in eine Längsrichtung und von 200 % bis 1000 % in eine Querrichtung aufweist, bevorzugt eine Dehngrenze von 20 % bis 125 % in eine Längsrichtung und von 300 % bis 600 % in eine Querrichtung.
Ausführungsform 7: Verfahren nach einer der Ausführungsformen 1 bis 6, wobei die mindestens eine erste Folienschicht selbst adhäsiv ist, wobei die Eigenadhäsion im Bereich von 2 bis 100 kPa, bevorzugt von 10 bis 80 kPa ist.
Ausführungsform 8: Verfahren nach einer der Ausführungsformen 1 bis 7, wobei die zu applizierende Folie mit einer Zugspannung aufgebracht wird, wobei die Zugspannung in einem Bereich von 1 MPa bis 100 MPa, bevorzugt von 5 MPa bis 90 MPa, besonders bevorzugt von 10 MPa bis 60 MPa ist.
Ausführungsform 9: Verfahren nach einer der Ausführungsformen 1 bis 8, wobei die mindestens eine erste Folienschicht mindestens ein Material aufweist ausgewählt aus der Gruppe bestehend aus Polyamid (PA); Polyethylen (PE); Polyethylen niedriger Dichte (LDPE); Polyethylennaphthalat (PEN); Polyethylenterephthalat (PET); Polypropylen (PP); Polyurethan (PU); Polyether Polyurethan; Polyimid (PI); Polyvinylalkohol (PVOH); und Polyvinylchlorid (PVC), oder wobei die mindestens eine erste Folienschicht mehreren Lagen verschiedener Polymere umfasst als Kombination der Einzelmaterialien wie beispielsweise PE/PA/PE; PET/PE; PE/PP.
Ausführungsform 10: Verfahren nach einer der Ausführungsformen 1 bis 9, wobei das Duroplastsystem ein Duroplastsystem auf Basis von Polyester, Epoxidharz, Vinylester, Dicyclopentadien, Polyurethan, Acrylat oder Polyurethan-Acrylat ist, oder wobei das Thermoplastsystem ein Thermoplastsystem auf Basis von Caprolactam oder Polymethyl Methacrylat ist.
Ausführungsform 11: Verfahren nach einer der Ausführungsformen 1 bis 10, wobei mindestens eine zweite Folienschicht teilweise oder vollständig überlappend mit der mindestens einen ersten Folienschicht auf die die äußere Oberfläche bildende Schicht appliziert wird.
Ausführungsform 12: Verfahren nach einer der Ausführungsformen 1 bis 11, wobei das Verfahren mindestens einen Formungsschritt umfasst, wobei in dem Formungsschritt das Komposite-Element unter annähernder Beibehaltung eines Querschnitts geformt wird.
Ausführungsform 13: Verfahren nach der Ausführungsform 12, wobei der Formungsschritt das Formen zu einer Schraubenfeder umfasst.
Ausführungsform 14: Verfahren nach einer der Ausführungsformen 1 bis 13, wobei das Verfahren mindestens einen Aushärteschritt aufweist, wobei in dem Aushärteschritt das Komposite-Element ausgehärtet wird.
Ausführungsform 15: Verfahren nach der Ausführungsform 14, wobei der Formungsschritt vor und/oder während dem Aushärteschritt erfolgt.
Ausführungsform 16: Verfahren nach einer der Ausführungsformen 13 und 14, wobei das Aushärten des Komposite-Elements über eine Energiezufuhr und/oder konvektiven Wärmetransport mit Heißluft oder Flüssigkeit erfolgt.
Ausführungsform 17: Verfahren nach der Ausführungsform 16, wobei die Flüssigkeit Öl ist, wobei das Aushärten in einem Ölbad erfolgt.
Ausführungsform 18: Verfahren nach einer der Ausführungsformen 1 bis 17, wobei das Bereitstellen des Komposite-Elements ein Bereitstellen eines inneren Elements und ein Aufbringen des Duroplastsystems oder des Thermoplastsystems und der Verstärkungsfasern umfasst.
Ausführungsform 19: Verfahren nach einer der Ausführungsformen 1 bis 18, wobei die Verstärkungsfasern ausgewählt sind aus der Gruppe bestehend aus Glasfasern, Kohlefasern, Basaltfasern, Nylon-Fasern; und Aramid-Fasern.
Ausführungsform 20: Gehärtetes Element, hergestellt oder herstellbar durch ein Verfahren nach einer der Ausführungsformen 1 bis 19.
Ausführungsform 21: Verwendung eines gehärteten Elements nach einer der Ausführungsformen 1 bis 19, ausgewählt aus der Gruppe bestehend aus einem Stabilisator, einer Drehstabfeder, einer Schraubenfeder, einem Rohr, einem Lenkgestänge, einem Handlauf; und einem Geländer.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: ein Ausführungsbeispiel eines erfindungsgemäßen Verfahrens;
- Figur 2: ein Ausführungsbeispiel eines Applizierens einer ersten Folienschicht;
- Figur 3: ein Ausführungsbeispiel eines Applizierens der ersten Folienschicht und einer zweiten Folienschicht;
- Figuren4A und 4B: einen Vergleich einer Folierung in gleichdrehender und entgegen einer Drehrichtung einer Faserapplikationsrichtung und ein Beispiel für Einschnürungen bei gleichdrehender Drehrichtung;
- Figur 5: einen Testaufbau zur Messung der Eigenadhäsion; und
- Figur 6: experimentelle Ergebnisse zur Messung der Eigenadhäsion.

### Beschreibung der Ausführungsbeispiele

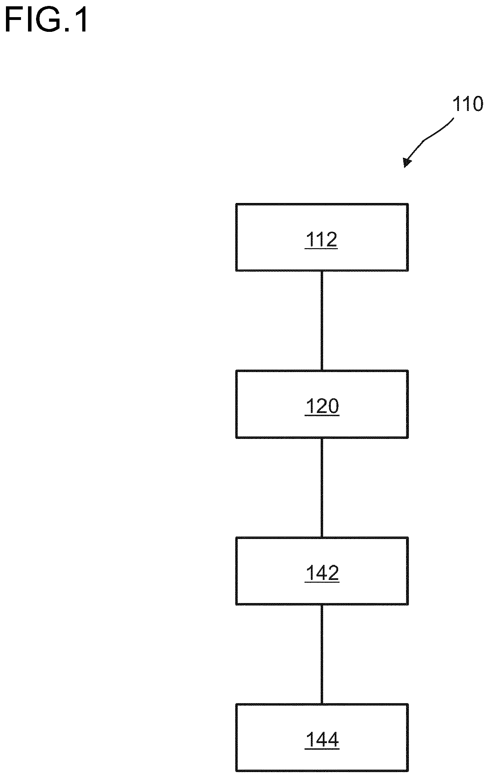

Figur 1 zeigt ein Ausführungsbeispiel eines erfindungsgemäßen Verfahrens 110 zur Herstellung eines gehärteten Elements. Das Verfahren umfasst die folgenden Schritte:
- (bezeichnet mit Bezugsziffer 112) Bereitstellen eines Komposite-Elements 114, welches eine eine äußere Oberfläche 116 bildende Schicht aufweist, wobei die die äußere Oberfläche 116 bildende Schicht mindestens ein ungehärtetes Duroplastsystem oder mindestens ein ungehärtetes Thermoplastsystem und Verstärkungsfasern 118 aufweist, wobei die Verstärkungsfasern zumindest teilweise in das Duroplastsystem oder Thermoplastsystem eingebettet sind,
- (bezeichnet mit Bezugsziffer 120) Applizieren mindestens einer ersten Folienschicht 122 auf die die äußere Oberfläche 116 bildende Schicht, wobei die mindestens eine erste Folienschicht 122 in einer Drehrichtung 124 entgegen einer Faserapplikationsrichtung 126 der Verstärkungsfasern 118 der äußeren Oberfläche 116 appliziert wird.

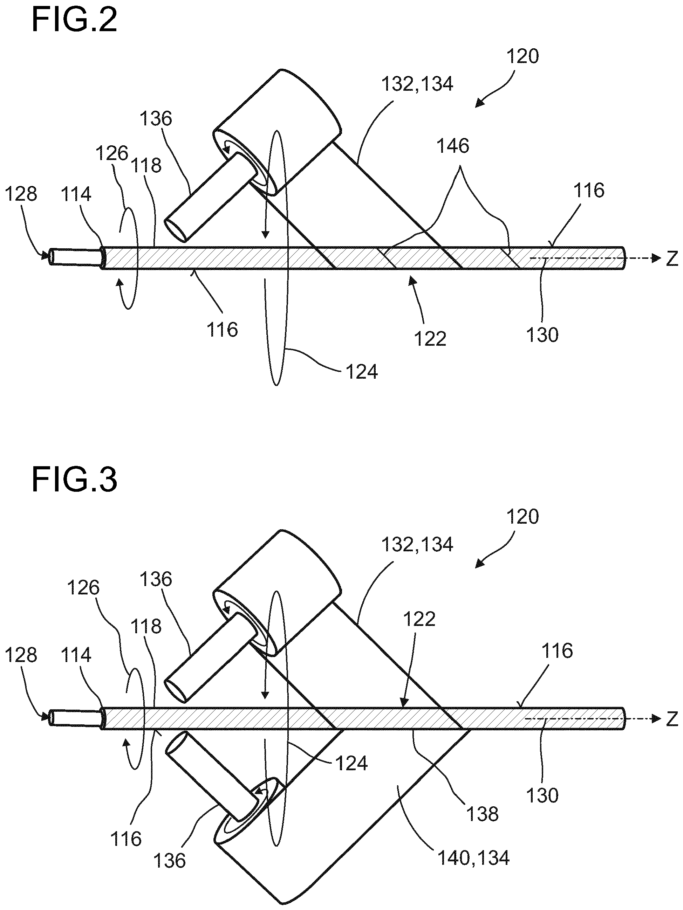

Beispielsweise kann das gehärtete Element ausgewählt sein aus der Gruppe bestehend aus einer Schraubenfeder, einer Drehstabfeder, einem Rohr, einem Stabilisator, einem Lenkgestänge, einem Handlauf und einem Geländer. Das Komposite-Element 114 kann ein Halbzeug sein, welches beispielsweise mindestens ein Element aufweist ausgewählt aus der Gruppe bestehend aus einem Strang, insbesondere einem Strangprofil; einem Stab; einem Rohr; einer Platte; einem Endlosprofil; und einer Endlosplatte. Das Komposite-Element 114 kann die äußere Oberfläche 116, einen Querschnitt und eine Längsausdehnung aufweisen. Das Komposite-Element 114 kann ein Hohl- oder Kompaktkörper sein. Das Komposite-Element 114 kann eine Hohlprofil oder ein Vollprofil aufweisen. Figuren 2 und 3 zeigen Ausführungsformen, in welchen das Komposite-Element 115 als ein Rohr oder Stab ausgestaltet ist.

Die die äußere Oberfläche 116 bildende Schicht weist das mindestens eine ungehärtete Duroplastsystem oder das mindestens eine ungehärtete Thermoplastsystem und Verstärkungsfasern 118 auf. Das Duroplastsystem kann mindestens ein Matrixsystem umfassend mindestens ein duroplastisches Polymer aufweisen. Das Duroplastsystem kann ein Duroplastsystem auf Basis von Polyester, Epoxidharz, Vinylester, Dicyclopentadien, Polyurethan, Acrylat oder Polyurethan-Acrylat sein. Das Thermoplastsystem kann mindestens ein Matrixsystem umfassend mindestens ein thermoplastisches Polymer aufweisen. Das Thermoplastsystem kann ein Thermoplastsystem auf Basis von Caprolactam oder Polymethyl Methacrylat sein. Das Komposite-Element 114 kann insbesondere biegeschlaff sein.

Die Verstärkungsfasern 118 können ausgewählt sein aus der Gruppe bestehend aus Glasfasern, Kohlefasern, Basaltfasern, Nylon-Fasern, und Aramid-Fasern. Die Verstärkungsfasern 118 können in Form von so genannten "Rovings" als Bündel, Strang oder Multifilamentgarn aus im wesentlichen parallel angeordneten Filamenten (Endlosfasern) eingesetzt werden. Der Querschnitt eines Rovings ist vorzugsweise elliptisch oder rechteckig, wobei elliptisch auch die runde Form umfasst. Bevorzugt werden Glasfaser-Rovings mit einer Feinheit im Bereich von 100 bis 10.000 tex, vorzugsweise im Bereich von 600 bis 4000 tex, eingesetzt.

Das Bereitstellen 112 des Komposite-Elements 114 kann ein Bereitstellen eines inneren Elements 128 und ein Aufbringen des Duroplastsystems oder des Thermoplastsystems und der Verstärkungsfasern 118, insbesondere gemeinsam, auf das innere Element 128 umfassen. Das innere Element 128 kann ein sogenannter "Inliner" oder Kern des Komposite-Elements 114 sein. Das Komposite-Element 114 kann ein Hohlkörper sein. Das innere Element 128 kann beispielsweise ein Rohr oder einen Schlauch aufweisen, insbesondere aus duroplastischem oder thermoplastischem Kunststoff, bevorzugt einen Schlauch aus Polyethylen oder thermoplastischem Polyurethan. Das innere Element 128 kann beispielsweise ein Strang verdrillter Fasern, insbesondere Glasfasern, sein. Die Verstärkungsfasern 118 sind zumindest teilweise in das Duroplastsystem oder Thermoplastsystem eingebettet. Die Verstärkungsfasern 118 können beispielsweise mit dem Duroplastsystem oder Thermoplastsystem imprägniert und/oder benetzt und/oder behandelt sein.

Die Verstärkungsfasern 118, insbesondere die benetzten Verstärkungsfasern, können auf das innere Element 128 appliziert werden. Das Applizieren der Verstärkungsfasern 118 kann entlang der Faserapplikationsrichtung 126 erfolgen, entlang welcher die Verstärkungsfasern 118 appliziert werden, insbesondere eine Drehrichtung oder eine Wicklungsrichtung. Die Verstärkungsfasern 118 können um das innere Element 128 gewickelt werden. Die Faserapplikationsrichtung 126 kann linksdrehend oder rechtsdrehend sein. Eine Längsachse 130 des inneren Elements 128 kann beispielsweise eine z-Achse sein. Die Faserapplikation kann in einem Winkel zu der Längsachse 130 des inneren Elements erfolgen. Beispielsweise kann ein Winkel zwischen der Längsachse 130 und den Verstärkungsfasern 118 zwischen 15° und 75° sein. Das Bereitstellen 112 des Komposite-Element 114 kann beispielsweise mittels eines Pultrusions-Verfahrens, eines Filament-Winding-Verfahrens oder eines Pullwinding-Verfahrens erfolgen.

Figur 2 zeigt ein Ausführungsbeispiel eines Applizierens 120 der ersten Folienschicht 122. Die erste Folienschicht 122 kann eine Lage oder einer Vielzahl von Lagen eines Folienmaterials 132 aufweisen. Das Folienmaterial 132 kann vor dem Applizieren als Bandmaterial 134 vorliegen. Beispielsweise kann das Folienmaterial 132 um eine Spule 136 gewickelt sein, welche während des Applizierens abgerollt wird. Das Applizieren 120 der mindestens einen ersten Folienschicht 122 kann manuell oder maschinell erfolgen. Das Applizieren 120 der ersten Folienschicht 122 kann entlang der Drehrichtung 124 erfolgen. Das Applizieren 120 der ersten Folienschicht 122 kann ein Umwickeln des Komposite-Elements 114 mit Folie umfassen.

Übliche Ummantelungen, wie die beispielsweise aus den oben zitierten Dokumenten bekannten Ummantelungen, können nachteilig hinsichtlich einer Festigkeit des gehärteten Elements sein. Bei einer Aushärtung und Formung kann sich die Ummantelung in das darunterliegende Material eingraben, beziehungsweise dieses Einschnüren, und so zu einer Verringerung der Festigkeit führen, woraus ein Versagen des gehärteten Elements resultieren kann. Erfindungsgemäß wird vorgeschlagen, dass die mindestens eine erste Folienschicht 122 in einer Drehrichtung 124 entgegen der Faserapplikationsrichtung 126 der Verstärkungsfasern 118 der äußeren Oberfläche 116 appliziert wird. Die Drehrichtung 124 der Applikation der ersten Folienschicht 122 kann somit umgekehrt zur Drehrichtung 126 der letzten Faserlage des Komposite-Elements 114 erfolgen. In Figur 2 ist eine Ausführungsform gezeigt, in welcher die mindestens eine erste Folienschicht 122 linksdrehend bei einer für die äußerste Lage rechtsdrehenden Faserapplikationsrichtung 126 auf die die äußere Oberfläche 116 bildende Schicht appliziert wird. Auch eine umgekehrte Ausgestaltung ist jedoch denkbar. Überraschender Weise kann so ein Einschnüren der Folienschicht in das Komposite-Element 114 beim Aushärten und Formen verhindert werden.

Die erste Folienschicht 122 kann derart appliziert werden, dass ein Auslaufen des Komposite-Elements 114 verhindert wird. Die erste Folienschicht 122 kann sich zumindest teilweise überlappend appliziert werden, derart dass zwischen den Lagen der ersten Folienschicht 122 ein Austreten von Flüssigkeit aus dem Komposite-Elements 114 verhindert wird. In Figur 2 sind schematisch und beispielhaft Kanten 146 unterer Folienlagen gezeigt. Die mindestens eine erste Folienschicht 122 kann selbst adhäsiv sein. Die Eigenadhäsion kann beispielsweise in einem Bereich von 2 bis 100 kPa, bevorzugt von 10 bis 80 kPa sein.

Die mindestens eine erste Folienschicht 122 kann das mindestens eine Folienmaterial 132 aufweisen. Das Folienmaterial 132 kann mindestens ein Material aufweisen ausgewählt aus der Gruppe bestehend aus Polyamid (PA); Polyethylen (PE); Polyethylen niedriger Dichte (LDPE); Polyethylennaphthalat (PEN); Polyethylenterephthalat (PET); Polypropylen (PP); Polyurethan (PU); Polyether Polyurethan; Polyimid (PI); Polyvinylalkohol (PVOH); und Polyvinylchlorid (PVC), oder wobei die mindestens eine erste Folienschicht mehreren Lagen verschiedener Polymere umfasst als Kombination der Einzelmaterialien wie beispielsweise PE/PA/PE; PET/PE; PE/PP.

Das Folienmaterial 132 der ersten Folienschicht 122 kann temperaturbeständig bis mindestens zu einer Aushärtetemperatur des Duroplastsystems und/oder des Thermoplastsystems sein. Das Folienmaterial 132 kann temperaturbeständig bis bevorzugt ≥120 °C, besonders bevorzugt bis ≥160 °C sein. So kann ein Aushärteprozess zum Aushärten des Komposite-Elements 114 bei hohen Temperaturen möglich sein.

Das Folienmaterial 132 kann eine Dicke von 1 bis 50 µm, bevorzugt eine Dicke von 1 bis 20 µm, besonders bevorzugt eine Dicke von 1 bis 10 µm aufweisen. Durch eine Verwendung einer derart dünnen Folie können ein Formen des Komposite-Elements 114 und ein Wärmetransport möglich sein. Insbesondere kann die erste Folienschicht 122 als dünne Schicht ausgestaltet sein, so dass ein Formen des Komposite-Elements 114 und ein Wärmetransport möglich sind.

Das Folienmaterial 132 kann dehnbar sein. Das Folienmaterial 132 kann eine Dehngrenze von 10 % bis 250 % in eine Längsrichtung und von 200 % bis 1000 % in eine Querrichtung aufweisen, bevorzugt eine Dehngrenze 20 % bis 125 % in eine Längsrichtung und von 300 % bis 600% in eine Querrichtung.

Das Verfahren 110 kann weiter ein Applizieren mindestens einer zweiten Folienschicht 138 teilweise oder vollständig überlappend mit der mindestens einen ersten Folienschicht 122 auf die die äußere Oberfläche 116 bildende Schicht umfassen. Figur 3 zeigt ein Ausführungsbeispiel eines Applizierens der ersten Folienschicht 122 und der zweiten Folienschicht 138. Hinsichtlich der Eigenschaften des Folienmaterials 140 der zweiten Folienschicht 138 kann auf die Beschreibung des Applizierens der ersten Folienschicht 122 und des Folienmaterials 132 der ersten Folienschicht 122 verwiesen werden. Das Folienmaterial 140 der zweiten Folienschicht 138 und das Folienmaterial 132 der ersten Folienschicht 122 können identisch oder verschieden ausgestaltet sein. Das Folienmaterial 140 kann vor dem Applizieren als Bandmaterial 134 vorliegen. Beispielsweise kann das Folienmaterial 140 um eine weitere Spule 136 gewickelt sein, welche während des Applizierens abgerollt wird. Das Applizieren der zweiten Folienschicht 138 kann manuell oder maschinell erfolgen. Das Applizieren der zweiten Folienschicht 138 kann entlang der Drehrichtung 124 erfolgen. Das Applizieren der zweiten Folienschicht 138 kann ein Umwickeln des Komposite-Elements 114 mit Folie umfassen. Die erste Folienschicht 122 und die zweite Folienschicht 138 können sich zumindest teilweise überlappend appliziert werden, derart zwischen den Lagen der ersten Folienschicht 122 und der zweiten Folienschicht 138 ein Austreten von Flüssigkeit aus dem Komposite-Elements 114 verhindert wird. Das Verfahren 110 kann weiter ein Applizieren von einer Mehrzahl von weiteren Folienschichten teilweise oder vollständig überlappend mit der mindestens einen ersten Folienschicht 122 auf die die äußere Oberfläche 116 bildende Schicht umfassen. Durch Applizieren von mehr als einer Folienschicht von mehr als einer Rolle gleichzeitig kann eine Neutralisation von Seitenkräften auf das Element 114 ermöglicht werden.

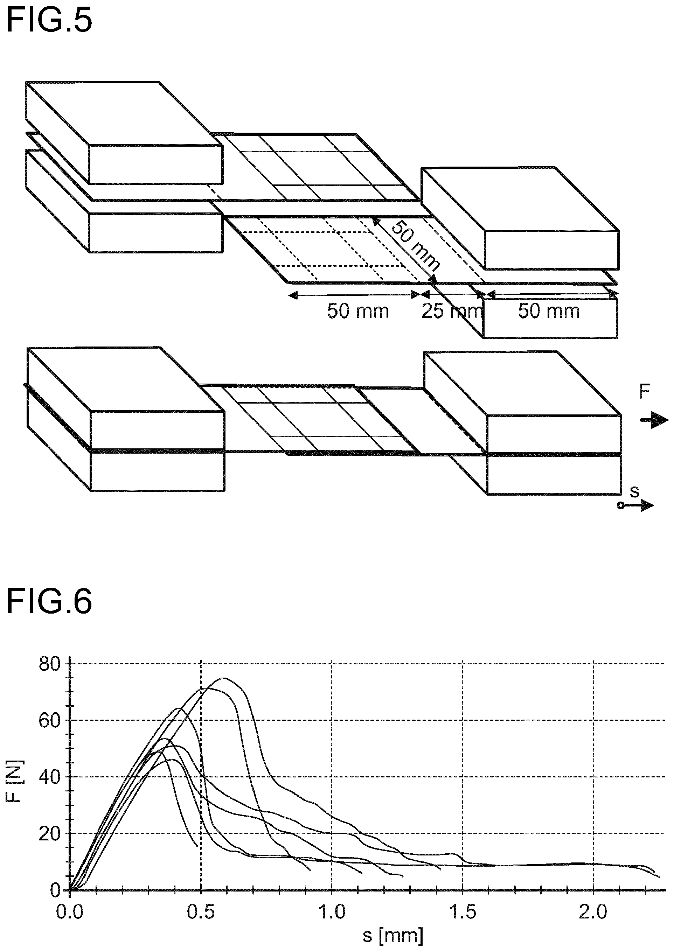

Figur 5 zeigt einen Testaufbau zur Messung der Eigenadhäsion. Eigenadhäsion von Folien kann eine Eigenschaft sein, welche es erlaubt, ein von der Folie umgebendes Element zu versiegeln, insbesondere vor Luft und/oder Feuchtigkeit. Die erste Folienschicht 122 und/oder die zweite Folienschicht 138 können eine Eigenadhäsion im Bereich von 2 bis 100 kPa, bevorzugt von 10 bis 80 kPa aufweisen. Die Eigenadhäsion einer Folie kann analog zur Festigkeit von Verklebungen gemäß ISO 527-3 geprüft werden, beispielsweise mit dem in Figur 5 gezeigten Testaufbau . Beispielsweise wurden zwei dünne Kunststoffstreifen der Größe 5 x 12,5 cm an je einem Ende auf einer Fläche von 5 x 5 cm mit der zu prüfenden Folie einlagig umwickelt. Die Kunststoffstreifen wurden dann mit den jeweils umwickelten Folienflächen aufeinander gelegt und mit einem Klemmdruck von 3 bar einmalig zusammen gepresst, siehe Figur 5 oben. Danach wurden die Streifen in Längsrichtung mit 25 mm/min auseinandergezogen bis die Zugkraft größer wurde als die Adhäsion der Folienflächen aufeinander, siehe Figur 5 unten. Die kritische Eigenadhäsion wurde als Spannung berechnet aus dem Quotienten der Prüfkraft beim Ablösen der Folien voneinander und der Quadratfläche von 25 cm². Figur 6 zeigt experimentelle Ergebnisse zur Messung der Eigenadhäsion, insbesondere die Kraft F in Newton als Funktion der Dehnung s in mmm. Die Eigenadhäsions-Spannung der Folie, berechnet aus der maximalen Kraft F und der Kontaktfläche, lag bei zehn Versuchen im Mittel bei 59,7 N / 25 cm² = 2,4 N/cm² = 24000 Pa = 24 kPa.

Das Verfahren 110 kann mindestens einen Formungsschritt 142 umfassen. In dem Formungsschritt 142 kann das Komposite-Element 114 unter annähernder Beibehaltung eines Querschnitts geformt werden. Der Formungsschritt 142 kann nach dem Applizieren 120 der mindestens einer ersten Folienschicht 122, insbesondere und der mindestens einen zweiten Folienschicht 138, erfolgen. Der Formungsschritt 142 kann ein Einbringen des folierten Komposite-Elements 114 in eine Formgebeeinheit umfassen. Die Formgebeeinheit kann mindestens ein Element aufweisen ausgewählt aus der Gruppe bestehend aus einer Matrize; einer Außenform, insbesondere einer Außenform mit helikaler Nut, einer Außenform mit beweglicher Kontaktfläche oder mit unbeweglicher, glatter und gleitfähiger Kontaktfläche; einer Innenform, insbesondere einer Innenform mit helikaler Nut; einer Rolle; und einer Öffnung. Das Formen kann insbesondere das Formen zu einer Gestalt ausgewählt aus der Gruppe bestehend aus einer Schraubenfeder, einem Stabilisator, einem Lenkgestänge, einem Handlauf, und einem Geländer umfassen.

Das Verfahren 110 kann weiter mindestens einen Aushärteschritt 144 aufweisen, wobei in dem Aushärteschritt 144 das Komposite-Element 114 ausgehärtet wird. Der Formungsschritt 142 kann vor dem Aushärteschritt 144 oder während des Aushärteschrittes 144 erfolgen. Das Aushärten des Komposite-Elements 114 kann über eine Energiezufuhr, beispielsweise durch Strahlung, insbesondere durch Strahlung im Infrarot oder im Radiowellen Bereich, und/oder konvektiven Wärmetransport mit Heißluft oder Flüssigkeit erfolgen. Die Flüssigkeit kann beispielsweise Öl sein, wobei das Aushärten in einem Ölbad erfolgen kann. Die Verwendung der mindestens einen ersten Folienschicht 122 kann eine direkte Aushärtung über konvektiven Wärmetransport mit heißer Luft oder Flüssigkeit erlauben.

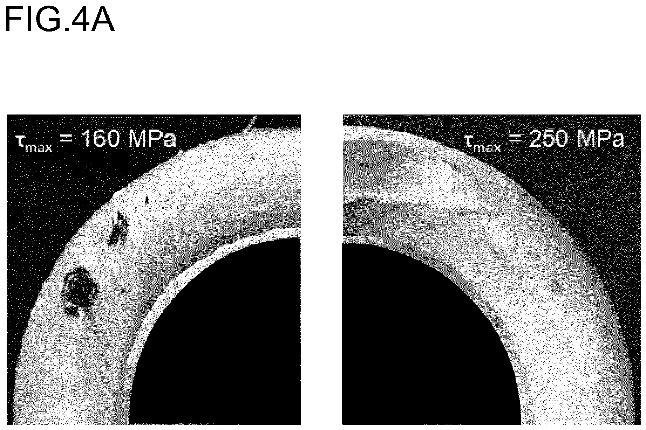

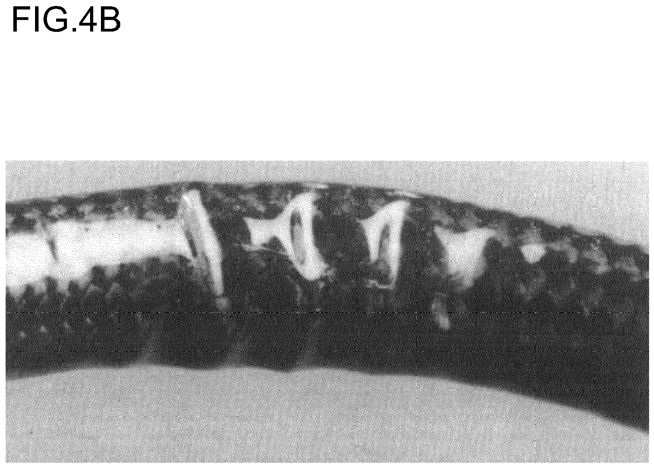

Figur 4 A zeigt einen Vergleich zwischen einem geformten und gehärteten Element mit einer Folierung in gleicher Drehrichtung zur Faserapplikationsrichtung 126 (links) und entgegen der Faserapplikationsrichtung 126 (rechts). Das gehärtete Element mit Folierung in gleicher Drehrichtung zur Faserapplikationsrichtung 126 zeigt Einschnürungen und Gräben. Diese können bei einer Aushärtung und Formung entstehen, bei welchen sich die Folienschicht in das darunterliegende Material eingräbt. Das gehärtete Element mit Folierung, in welcher die Applikation der ersten Folienschicht 122 in einer Drehrichtung 124 entgegen der Faserapplikationsrichtung 126 erfolgte, zeigt derartige Einschnürungen und Gräben nicht. Durch Applizieren der ersten Folienschicht 122 in einer Drehrichtung 124 entgegen der Faserapplikationsrichtung 126 kann ein Einschnüren und Eingraben verhindert werden. Einschnürungen und Gräben können insbesondere nachteilig hinsichtlich einer Festigkeit des gehärteten Elements sein. Beispielsweise kann es bei dem in Figur 4A gezeigten Beispiel zu einem Abfall der maximalen korrigierten Schubfestigkeit für eine Million Prüfzyklen des gehärteten Elements mit gleichdrehender Folierung gegenüber dem gehärteten Elements mit andersdrehender Folierung von ca. 250 MPa für das andersdrehend folierte Element auf 160 MPa für das gleichdrehend folierte Element kommen. Figur 4B zeigt ein Beispiel für Einschnürungen bei einer Umhüllung aus "Carbon Fibre Coil Springs", J.C. Hendry and C. Probert, Materials & Design, Vol. 7, No. 6, 1986, S. 330-337.

### Bezugszeichenliste

- 110: Verfahren
- 112: Bereitstellen
- 114: Komposite-Element
- 116: Oberfläche
- 118: Verstärkungsfasern
- 120: Applizieren
- 122: erste Folienschicht
- 124: Drehrichtung
- 126: Faserapplikationsrichtung
- 128: inneres Element
- 130: Längsachse
- 132: Folienmaterial
- 134: Bandmaterial
- 136: Spule
- 138: zweite Folienschicht
- 140: Folienmaterial
- 142: Formungsschritt
- 144: Aushärteschritt
- 146: Kante

## Patentansprüche

1. Verfahren (110) zur Herstellung eines gehärteten Elements, wobei das Verfahren (110) die folgenden Schritte umfasst:
- Bereitstellen (112) eines Komposite-Elements (114), welches eine eine äußere Oberfläche (116) bildende Schicht aufweist, wobei die die äußere Oberfläche (116) bildende Schicht mindestens ein ungehärtetes Duroplastsystem oder mindestens ein ungehärtetes Thermoplastsystem und Verstärkungsfasern (118) aufweist, wobei die Verstärkungsfasern (118) zumindest teilweise in das Duroplastsystem oder Thermoplastsystem eingebettet sind,
- Applizieren (120) mindestens einer ersten Folienschicht (122) auf die die äußere Oberfläche (116) bildende Schicht, wobei die mindestens eine erste Folienschicht (122) in einer Drehrichtung (124) entgegen einer Faserapplikationsrichtung (126) der Verstärkungsfasern (118) der äußeren Oberfläche (116) appliziert wird.

2. Verfahren (110) nach dem vorhergehenden Anspruch, wobei die mindestens eine erste Folienschicht (122) linksdrehend bei einer für die äußerste Lage rechtsdrehenden Faserapplikationsrichtung (126) auf die die äußere Oberfläche (116) bildende Schicht appliziert wird, oder wobei die mindestens eine erste Folienschicht (122) rechtsdrehend bei einer für die äußerste Lage linksdrehenden Faserapplikationsrichtung (126) auf die die äußere Oberfläche (116) bildende Schicht appliziert wird.

3. Verfahren (110) nach einem der vorhergehenden Ansprüche, wobei ein Folienmaterial (132) der ersten Folienschicht (122) temperaturbeständig bis mindestens zu einer Aushärtetemperatur des Duroplastsystems und/oder des Thermoplastsystems ist, wobei das Folienmaterial (132) temperaturbeständig bis bevorzugt ≥120 °C, besonders bevorzugt bis ≥160 °C ist.

4. Verfahren (110) nach dem vorhergehenden Anspruch, wobei das Folienmaterial (132) eine Dicke von 1 bis 50 µm, bevorzugt eine Dicke von 1 bis 20 µm, besonders bevorzugt eine Dicke von 1 bis 10 µm aufweist.

5. Verfahren (110) nach einem der zwei vorhergehenden Ansprüche, wobei das Folienmaterial (132) dehnbar ist, wobei das Folienmaterial (132) eine Dehngrenze 10 % bis 250 % in eine Längsrichtung und von 200 % bis 1000 % in eine Querrichtung aufweist, bevorzugt eine Dehngrenze von 20 % bis 125 % in eine Längsrichtung und von 300 % bis 600% in eine Querrichtung.

6. Verfahren (110) nach einem der vorhergehenden Ansprüche, wobei die mindestens eine erste Folienschicht (122) selbst adhäsiv ist.

7. Verfahren (110) nach einem der vorhergehenden Ansprüche, wobei die mindestens eine erste Folienschicht (122) mindestens ein Material aufweist ausgewählt aus der Gruppe bestehend aus Polyamid (PA); Polyethylen (PE); Polyethylen niedriger Dichte (LDPE); Polyethylennaphthalat (PEN); Polyethylenterephthalat (PET); Polypropylen (PP); Polyurethan (PU); Polyether Polyurethan; Polyimid (PI); Polyvinylalkohol (PVOH); und Polyvinylchlorid (PVC), oder wobei die mindestens eine erste Folienschicht mehreren Lagen verschiedener Polymere umfasst als Kombination der Einzelmaterialien wie beispielsweise PE/PA/PE; PET/PE; PE/PP.

8. Verfahren (110) nach einem der vorhergehenden Ansprüche, wobei das Duroplastsystem ein Duroplastsystem auf Basis von Polyester, Epoxidharz, Vinylester, Dicyclopentadien, Polyurethan, Acrylat oder Polyurethan-Acrylat ist, oder wobei das Thermoplastsystem ein Thermoplastsystem auf Basis von Caprolactam oder Polymethyl Methacrylat ist.

9. Verfahren (110) nach einem der vorhergehenden Ansprüche, wobei mindestens eine zweite Folienschicht (138) teilweise oder vollständig überlappend mit der mindestens einen ersten Folienschicht (122) auf die die äußere Oberfläche (116) bildende Schicht appliziert wird.

10. Verfahren (110) nach einem der vorhergehenden Ansprüche, wobei das Verfahren (110) mindestens einen Formungsschritt (142) umfasst, wobei in dem Formungsschritt (142) das Komposite-Element (114) unter annähernder Beibehaltung eines Querschnitts geformt wird.

11. Verfahren (110) nach dem vorhergehenden Anspruch, wobei der Formungsschritt (114) das Formen zu einer Schraubenfeder umfasst.

12. Verfahren (110) nach einem der vorhergehenden Ansprüche, wobei das Verfahren (110) mindestens einen Aushärteschritt (144) aufweist, wobei in dem Aushärteschritt (144) das Komposite-Element (114) ausgehärtet wird, wobei das Aushärten des Komposite-Elements (114) über eine Energiezufuhr und/oder konvektiven Wärmetransport mit Heißluft oder Flüssigkeit erfolgt.

13. Verfahren (110) nach einem der vorhergehenden Ansprüche, wobei die Verstärkungsfasern (118) ausgewählt sind aus der Gruppe bestehend aus Glasfasern, Kohlefasern, Basaltfasern, Nylon-Fasern, und Aramid-Fasern.

14. Gehärtetes Element, hergestellt oder herstellbar durch ein Verfahren (110) nach einem der Ansprüche 1 bis 13.

15. Verwendung eines gehärteten Elements nach einem der Ansprüche 1 bis 13, ausgewählt aus der Gruppe bestehend aus einem Stabilisator, einer Drehstabfeder, einer Schraubenfeder, einem Rohr, einem Lenkgestänge, einem Handlauf, und einem Geländer.
